# NEUE EUROPÄISCHE PATENTSCHRIFT

(11) **EP 2 822 711 B2**
(45) Veröffentlichungstag und Bekanntmachung des Hinweises auf die Entscheidung über den Einspruch: **21.09.2022**
(45) Hinweis auf die Patenterteilung: 03.05.2017
(21) Anmeldenummer: 12766594.1
(22) Anmeldetag: 26.09.2012
(51) Int. Cl.: B08B 15/00, E01C 19/00, E01C 19/48

(54) **STRASSENFERTIGER**
ROAD FINISHING MACHINE
FINISSEUR

(30) Priorität: 06.03.2012 DE 102012004533
(43) Veröffentlichungstag der Anmeldung: 14.01.2015
(73) Patentinhaber: ABG Allgemeine Baumaschinen-Gesellschaft mbH, 31785 Hameln (DE)
(72) Erfinder: KOMM, Hans-Joachim, 31787 Hameln (DE); NIGGEMANN, Marc, 31785 Hameln (DE)
(74) Vertreter: Sparing Röhl Henseler
(86) Internationale Anmeldenummer: PCT/EP2012/004025
(87) Internationale Veröffentlichungsnummer: WO 2013/131540

(56) Entgegenhaltungen:
- EP-A1- 0 666 373
- EP-A1- 0 843 044
- WO-A1-2004/044331
- WO-A1-2007/043966
- DE-U1-202007 003 326
- DE-U1-202007 018 342
- GB-A- 141 769
- US-A- 5 443 325
- US-A- 5 938 371
- US-A- 6 079 901
- US-A- 6 152 649
- US-A1- 2005 191 174
- NIOSH: "Engineering Control Guidelines For Hot Mix Asphalt Pavers", , January 1997 (1997-01), pages 1-21,

## Beschreibung

Die Erfindung betrifft einen Straßenfertiger nach dem Oberbegriff des Anspruchs 1.

Ein derartiger Straßenfertiger ist bekannt aus EP 0 843 044 A1. Der Straßenfertiger ist mit einer Absaugvorrichtung für Emissionen des Einbauguts ausgestattet, bei der eine den Schneckenraum zumindest nach oben abdeckende Anordnung vorgesehen ist. Für eine Absaugung der Emissionen ist an den Schneckenraum ein Saug-Blas-Aggregat angeschlossen.

Aus EP 0 666 373 A1 ist ein Straßenfertiger mit einer Dampfabsaugung bekannt, die ein Leitungssystem enthält. Dieses Leitungssystem endet in einer raumbildenden Abdeckung, die den Schneckenraum zumindest nach oben abdeckt. Die Dämpfe werden so oberhalb der Schneckenanordnung gesammelt und der Ansaugöffnung des Leitungssystems zugeführt.

Aus EP 0 937 182 B1 und US 5,938,371 ist ein Straßenfertiger bekannt, der mit einem Absaugungssystem zum Ableiten von bituminösem Dampf, der von dem Asphaltmaterial ausgeht, ausgestattet ist. Ein wesentlicher Nachteil, der bei der Verarbeitung von Asphalt auftritt ist, dass die Öldestillate in dem Asphalt dazu tendieren, beträchtliche Mengen an Kohlenwasserstoffen und andere schlecht riechende Dämpfe abzugeben, wenn der Asphalt aufgeheizt wird.

Zum Ableiten von Dämpfen des Asphalts am Straßenfertiger weist das bekannte Absaugungssystem ein Luftleitungssystem mit einem sich in Längsrichtung erstreckenden Leitungsteil auf, das sich entlang einer Fördereinrichtung zum Transportieren des Asphalts im Straßenfertiger von einem Behälter zu Verteilerschnecken erstreckt, damit entlang dieser Förderstrecke und an deren Enden Dämpfe in einen Luftraum des Leitungsteils angesaugt und über ein Luftauslassteil ausgestoßen werden können. Das Luftauslassteil ist an den Luftraum angeschlossen, steht mit diesem in Verbindung und erstreckt sich zu einer Höhe über der Bedienstation. Innerhalb des Luftraumes ist ein Gebläse angeordnet, um Luft über die Leitungsteileingänge einzuziehen und durch das Luftauslassteil auszustoßen. Das Gebläse ist vorzugsweise ein Radialgebläse, kann jedoch irgendeine andere übliche Bauart besitzen und von einem elektrischen oder hydraulischen Motor angetrieben sein. Ein solches vom Aufbau des Straßenfertigers getragenes Absaugsystem ist relativ kostengünstig zu bauen. Die Minimierung der Menge der Dämpfe ist häufig jedoch nur unzureichend und der Reinigungs- und Instandhaltungsaufwand durch Ablagerungen im Luftleitungssystem ist hoch.

Aus WO 2004/044331 A1 ist bekannt, oberhalb der Verteilerschnecken eines Straßenfertigers die Einlässe von zwei separaten Leitungssystemen mit in den Lufträumen angeordneten Gebläsen zu positionieren. Die Minimierung der Menge der Dämpfe ist jedoch auch hier häufig nur unzureichend und der Reinigungs- und Instandhaltungsaufwand durch Ablagerungen im Luftleitungssystem ist wiederum hoch.

Aus US-A-5 443 325 ist eine Dampfverarbeitung bekannt, bei der die Dämpfe in dem Motor eines Fertigers verbrannt oder in anderer Weise verarbeitet werden, um die schädlichen Komponenten von den Dämpfen zu entfernen oder zu verringern. Solche Systeme steigern allerdings die Instandhaltungskosten, und das Verbrennen von Dämpfen in dem Motor hat sich als schädlich für die Nutzungsdauer des Motors erwiesen.

Aufgabe der Erfindung ist es daher, einen Straßenfertiger mit einem Absaugungssystem für schädliche Dämpfe bei der Verarbeitung von Asphalt zu schaffen, dessen Wirkungsgrad bei der Minimierung der Menge der Dämpfe, insbesondere Bitumendämpfe, die den Bediener der Maschine beeinträchtigen könnten, verbessert ist und dabei kostengünstig zu bauen und instand zu halten ist.

Diese Aufgabe wird durch die Merkmale des Anspruchs 1 gelöst.

Hierdurch wird ein Straßenfertiger mit einer Absaugung für Dampf, insbesondere Bitumendampf, geschaffen, die für eine verhältnismäßig verlustarme Absaugung sorgt und dadurch die Menge an abgesaugten Dämpfen erhöht. Die Strömungsgeschwindigkeit wird gesteigert, da Strömungsverluste in dem Leitungssystem der Dampfabsaugung minimiert werden, mit der Folge, dass die Ablagerung von Partikeln aus den Dämpfen weitgehend vermieden werden. Der Instandhaltungsaufwand ist dadurch reduziert. Die Abzugsleitung kann dann auf ein vom Gebläse im Wesentlichen in vertikaler Richtung nach oben verlaufendes Abzugsrohr reduziert werden.

Die Erfinder der vorliegenden Erfindung haben erkannt, dass die meisten Dämpfe entstehen, wenn der Asphalt von dem Längsförderer an den Querverteiler abgegeben wird. Der Längsförderer umfasst üblicherweise ein oder zwei Transportbänder, die den Asphalt in den Querverteiler abwerfen, wodurch eine Durchmischung eintritt, die ursächlich ist für eine erhöhte Dampfabgabe insbesondere von Bitumendämpfen. Asphalt ist bekanntlich eine natürliche oder technische Mischung aus dem aus Erdöl gewonnenen Bindemittel Bitumen und Gesteinskörnung, die im Straßenbau zur Anwendung kommt. Durch die erfindungsgemäße Saugwirkung des Gebläses wird zusammen mit Umgebungsluft die von dem Asphalt aufsteigenden Dämpfe also dort erfasst und durch die Ansaugöffnung abgesaugt, wo der überwiegende Anteil an Dampf entsteht.

Ferner wird erreicht, dass die durch das Gebläse von unten her in die Abzugsleitung hineinströmenden Dämpfe in ihrem Randbereich auch Umgebungsluft mitreißen und diese mit in die Ansaugöffnung hineinströmt. Dies hat zur Folge, dass über die Abzugsleitung neben den Dämpfen auch eine gewollte, nicht unbeträchtliche Menge von mehr oder minder mit Dämpfen vermischter Umgebungsluft mit angesaugt wird. Diese Sogströmung kann durch die Gebläseleistung und/oder die Öffnungsweite der Ansaugöffnung eingestellt werden.

Ein weiterer großer Vorteil besteht darin, dass die erfindungsgemäße Absaugung die Zugänglichkeit im Bereich oberhalb des Querverteilers, insbesondere der Verteilerschnecken, nicht stört und andererseits der Blick auf den Querverteiler vom Führerstand aus nicht verdeckt wird. Das Gebläse kann unterhalb einer Plattform des Führerstands positioniert werden und damit aus dem Blickfeld gerückt sein.

Dadurch, dass das Gebläse eingangsseitig der Abzugsleitung im Bereich der Ansaugöffnung angeordnet ist, entfallen Ansaugtrichter oder sonstige Ansaugleitungen, die vorgesehen sind, wenn das Gebläse entfernt von der Ansaugöffnung im Luftstromweg angeordnet ist. Der erhebliche Reinigungsaufwand für diese Ansaugleitungen entfällt damit.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine Seitenansicht eines Straßenfertigers mit einer Dampfabsaugung, insbesondere für Bitumendämpfe,
Fig. 2 zeigt schematisch eine perspektivische Unteransicht des Straßenfertigers gemäß Fig. 1 ohne Bohle,
Fig. 3 zeigt schematisch eine Rückansicht des Straßenfertigers gemäß Fig. 2,
Fig. 4 zeigt schematisch die Rückansicht des Straßenfertigers gemäß Fig. 3 mit Sogströmungen,
Fig. 5 zeigt schematisch eine perspektivische Draufsicht von Teilen der Dampfabsaugung gemäß Fig. 1,
Fig. 6 zeigt teilweise eine Unteransicht der Dampfabsaugung gemäß Fig. 5,
Fig. 7 zeigt schematisch eine perspektivische Draufsicht von Teilen eines zweiten Ausführungsbeispiels einer Dampfabsaugung,
Fig. 8 zeigt teilweise eine Unteransicht der Dampfabsaugung gemäß Fig. 7,
Fig. 9 zeigt schematisch eine perspektivische Draufsicht von Teilen eines dritten Ausführungsbeispiels einer Dampfabsaugung,

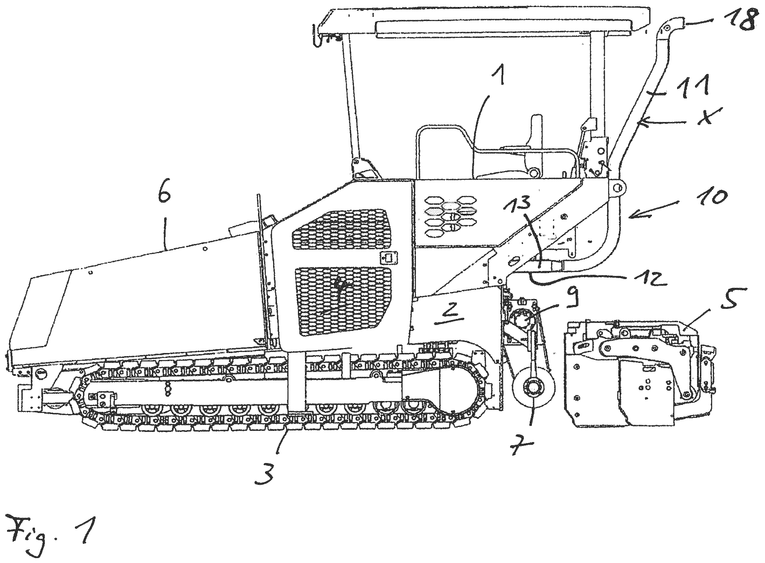

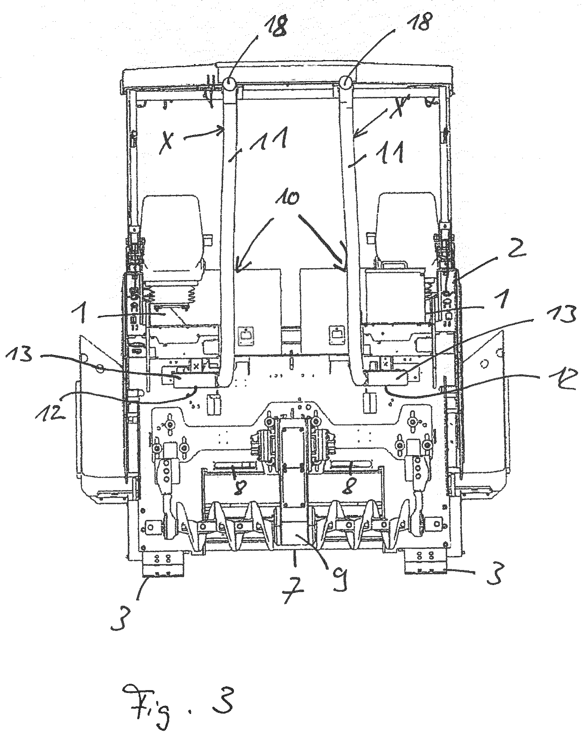

Die Fig. 1 bis Fig. 3 zeigen einen Straßenfertiger mit einem einen Führerstand 1 tragenden Chassis 2, einem Fahrwerk 3, mindestens einem Antriebsaggregat 4, einem Hydrauliksystem, einer Bohle 5, einer Asphaltzufuhranordnung umfassend einen Vorratsbunker 6 und eine aus dem Vorratsbunker 6 zu einem Querverteiler 7 fördernde Längsfördervorrichtung 8. Hierbei handelt es sich um eine übliche Ausbildung eines Straßenfertigers. Das Fahrwerk 3 ist üblicherweise ein Raupenfahrwerk, kann aber auch ein Radfahrwerk oder ein sonstiges Fahrwerk sein. Die Längsfördervorrichtung 8 umfasst vorzugsweise zwei parallel laufende Förderbänder, um einen rechten und einen linken Teil des Querverteilers getrennt beschicken zu können. Der Querverteiler 7 ist vorzugsweise als Verteilerschnecke ausgebildet mit einem vorzugsweise mittig angeordneten Schneckenantrieb 9.

Der Straßenfertiger umfasst weiterhin eine Gebläse betriebene Dampfabsaugung 10 mit mindestens einem Luftstromweg X, dessen Abzugsleitung 11 eine Ansaugöffnung 12 oberhalb des Querverteilers 7 und eine Auslassöffnung 18 in einer Höhe oberhalb des Führerstands 1 aufweist. Diese Dampfabsaugung 10 dient zum Absaugen insbesondere von bituminösem Dampf, Rauch und dgl.

Die durch ein Gebläse betriebene Dampfabsaugung 10 weist ein Gebläse 13 auf, das im Bereich der Ansaugöffnung 12 der Abzugsleitung 11 des mindestens einen Luftstromweges X angeordnet ist. Das Gebläse 13 weist einen Ansaugstutzen auf, der frei im Raum stehend eine Ansaugfläche als Ansaugöffnung 12 bildet. Gemäß einem nicht dargestellten Ausführungsbeispiel kann der Ansaugöffnung 12 ein Stummelstutzen vorgeordnet sein, um das Einsaugverhalten um die Ansaugöffnung 12 herum beeinflussen zu können.

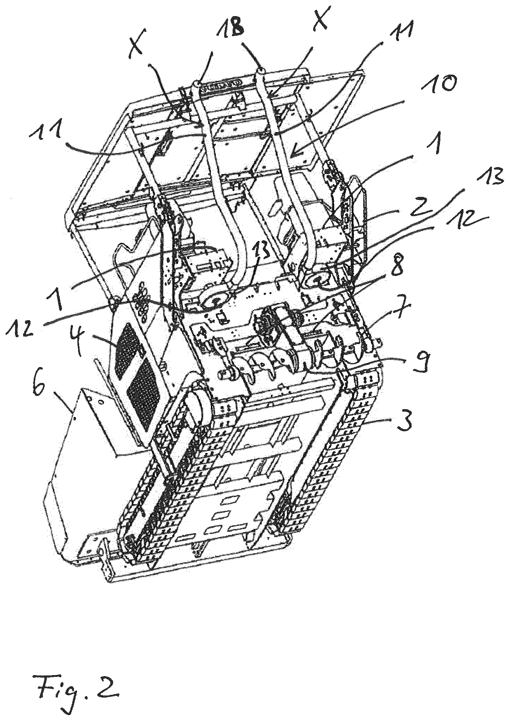

Wie Fig. 2 zeigt, ist die Ansaugöffnung 12 vorzugsweise rund oder vieleckig. Der Durchmesser der Ansaugöffnung 12 entspricht vorzugsweise im Wesentlichen dem Durchmesser der Abzugsleitung 11. Der Durchmesser der Ansaugöffnung 12 und damit vorzugsweise die Nennweite des Ansaugstutzens und Ausblasstutzens des Gebläses 13 liegen beispielsweise im Bereich von 100 bis 200 mm. Alternativ kann der Durchmesser der Ansaugöffnung 12 größer ausgelegt sein als der Durchmesser der Abzugsleitung 11. Abweichungen von bis zu 50% können hier vorteilhafte Effekte bewirken.

Das Gebläse 13 weist vorzugsweise ein axial ansaugendes Gebläserad mit radialem Luftaustritt auf. Das Gebläse 13 arbeitet vorzugsweise mit einer Leistung von 1000 bis 3000 m<3>/h Luftvolumenstrom. Die Leistung kann wählbar sein, um Einfluss nehmen zu können auf eine Lärmbelästigung, die von einem zu schnell laufenden Gebläse 13 ausgehen könnte. Das Gebläse 13 kann elektrisch oder hydraulisch angetrieben werden.

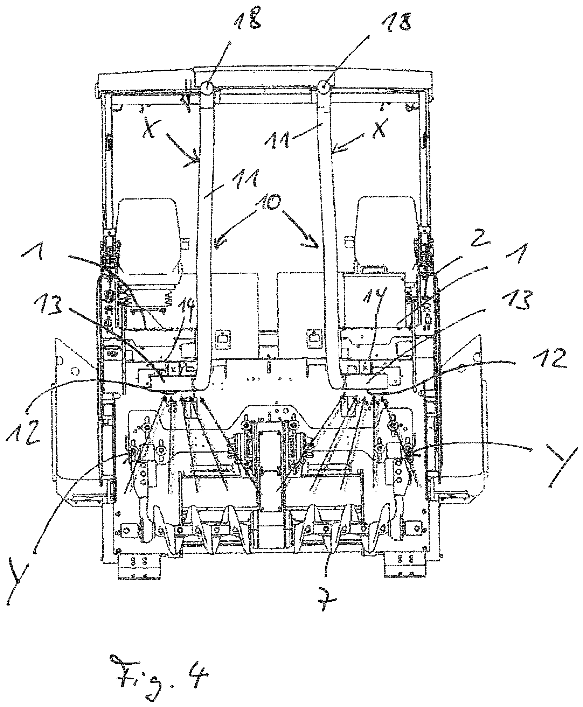

Wie Fig. 1 bis Fig. 4 zeigen, beträgt für die Ausbildung einer Sogweglänge zur Dampfabsaugung der vertikale Abstand zwischen der Ansaugöffnung 12 und einer Oberseite des Querverteilers 7 vorzugsweise mehr als 80 cm, insbesondere mehr als 90 cm. Wie Fig. 4 zeigt, entsteht so ein Strömungsfeld Y vom Querverteiler 7 zur Ansaugöffnung 12 der Dampfabsaugung 10, so dass auch die Umgebungsluft mitgerissen wird, die Reste von Dämpfen enthalten kann, und wodurch der Wirkungsgrad der erfindungsgemäßen Dampfabsaugung verbessert wird.

Das Gebläse 13 ist am Chassis 2 des Straßenfertigers derart anbringbar, dass es unterhalb einer Plattform 14 des Führerstandes 1 positioniert werden kann und damit außerhalb des Sichtfeldes eines Bedieners auf den Querverteiler 7 liegt. Die Plattform 14 kann dabei auch als Prallwand für Luftströme genutzt werden.

Wie die Fig. 1 bis Fig. 4 weiterhin zeigen, weist der Querverteiler 7 einen rechten und einen linken Abschnitt auf, denen jeweils ein Luftstromweg X wie vorstehend beschrieben zugeordnet ist. Die Dampfabsaugung 10 kann eine wählbare Anzahl Luftstromwege X mit jeweils mindestens einer Ansaugöffnung 12, einem Gebläse 13 und einer Abzugsleitung 11 aufweisen. Bedarfsbezogen ist die Anzahl wählbar und der Betrieb einer Mehrzahl Stromwege X ist elektronisch aufeinander abstimmbar.

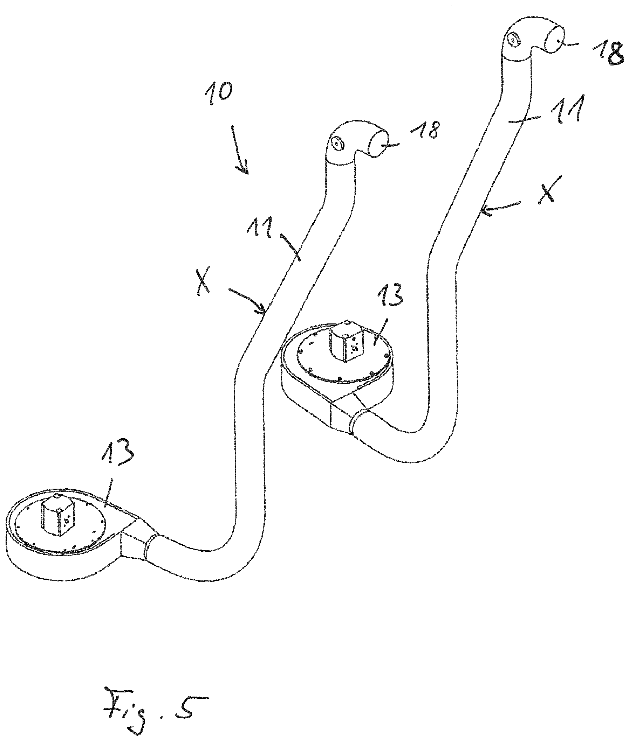

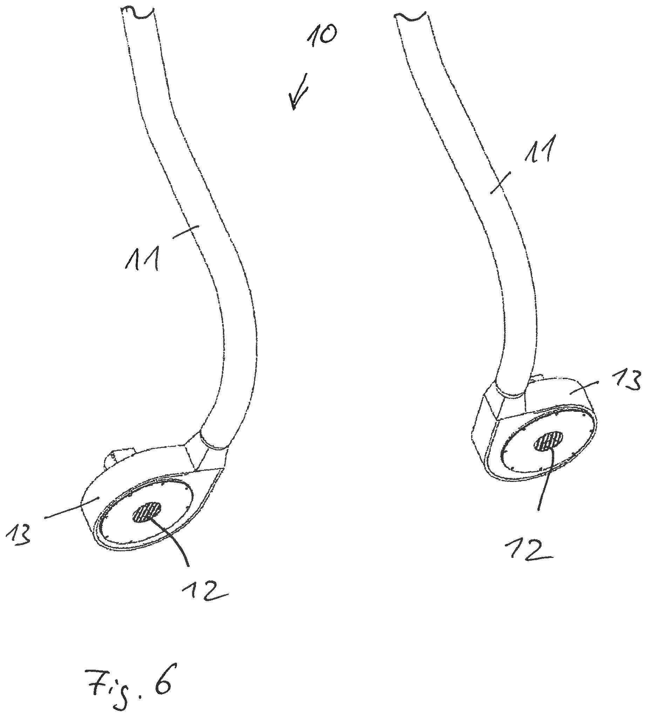

Die Fig. 5 und Fig. 6 zeigen die Dampfabsaugung 10 mit zwei Luftstromwegen X in vergrößerter Darstellung. Antriebseinheiten für das Gebläse 13 wurden nicht dargestellt. Diese Figuren verdeutlichen zudem, dass die Abzugsleitungen 11 weitgehend senkrecht nach oben verlaufen können und damit der Luftstromweg X kurzgehalten werden kann.

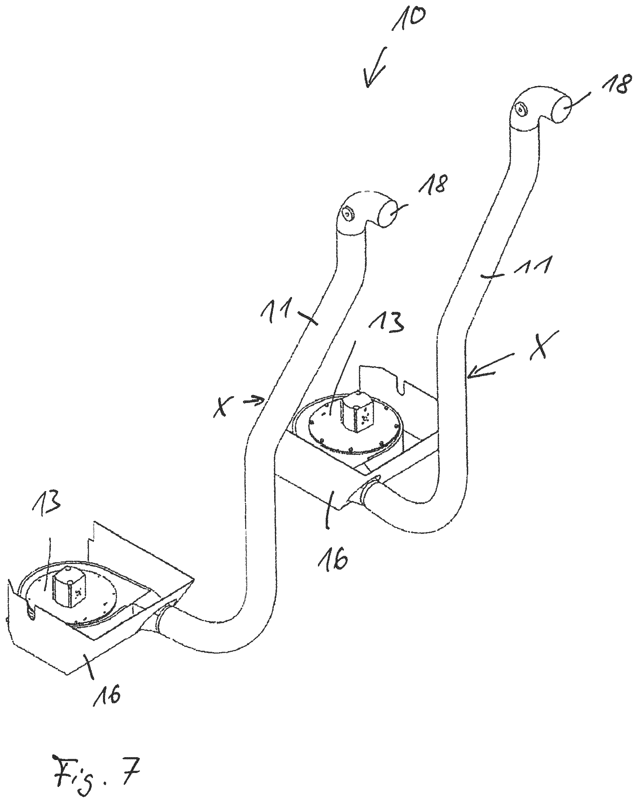

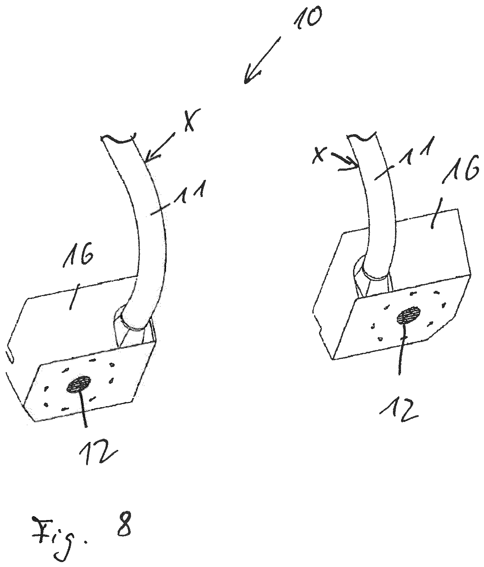

Die Fig. 7 und Fig. 8 zeigen eine Ausführungsform der Erfindung, bei der das jeweilige Gebläse 13 ummantelt ist von einem Gebläsegehäuse 16, das am Chassis 2 angeordnet werden kann.

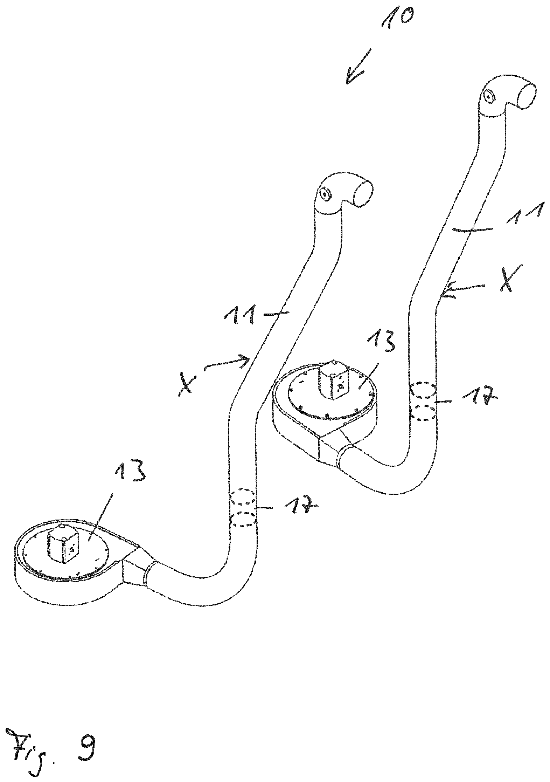

Fig. 9 zeigt eine Ausführungsform der Erfindung, bei der im Luftstromweg X hinter der Ansaugöffnung 12 ein Filterelement 17 und/oder ein Schalldämpfer angeordnet ist.

## Patentansprüche

1. Straßenfertiger mit einem einen Führerstand (1) tragenden Chassis (2), einem Fahrwerk (3), mindestens einem Antriebsaggregat (4), einem Hydrauliksystem, einer Bohle (5), einer Asphaltzufuhranordnung umfassend einen Vorratsbunker (6) und eine aus dem Vorratsbunker (6) zu einem Querverteiler (7) fördernde Längsfördervorrichtung (8) und mit einer Gebläse betriebenen Dampfabsaugung (10) mit mindestens einem Luftstromweg (X), dessen Abzugsleitung (11) eine Ansaugöffnung (12) oberhalb des Querverteilers (7) und eine Auslassöffnung (18) in einer Höhe oberhalb des Führerstands (1) aufweist, und das Gebläse (13) im Bereich der Ansaugöffnung (12) der Abzugsleitung (11) des mindestens einen Luftstromweges (X) angeordnet ist, **dadurch gekennzeichnet, dass** die Ansaugöffnung (12) der Abzugsleitung (11) die Ansaugöffnung der Dampfabsaugung (10) bildet, das Gebläse (13) einen Ansaugstutzen aufweist, der frei im Raum stehend eine Ansaugfläche als Ansaugöffnung (12) bildet und das Gebläse (13) eingangsseitig der Abzugsleitung (11) im Bereich der Ansaugöffnung (12) angeordnet ist.

2. Straßenfertiger nach Anspruch 1, **dadurch gekennzeichnet, dass** die Ansaugöffnung (12) rund oder vieleckig ist.

3. Straßenfertiger nach Anspruch 1 oder 2, **dadurch gekennzeichnet, dass** der Durchmesser der Ansaugöffnung (12) im Wesentlichen dem Durchmesser der Abzugsleitung (11) entspricht.

4. Straßenfertiger nach einem der Ansprüche 1 bis 3, **dadurch gekennzeichnet, dass** die Nennweite der Abzugsleitung (11) im Bereich von 100 bis 200 mm liegt.

5. Straßenfertiger nach einem der Ansprüche 1 bis 4, **dadurch gekennzeichnet, dass** das Gebläse (13) ein axial ansaugendes Gebläserad mit radialem Luftaustritt aufweist.

6. Straßenfertiger nach einem der Ansprüche 1 bis 5, **dadurch gekennzeichnet, dass** das Gebläse (13) mit einer Leistung von 1000 bis 3000 m³/h Luftvolumenstrom arbeitet.

7. Straßenfertiger nach einem der Ansprüche 1 bis 6, **dadurch gekennzeichnet, dass** für die Ausbildung einer Sogweglänge der vertikale Abstand zwischen der Ansaugöffnung (12) und einer Oberseite des Querverteilers (7) mehr als 80 cm beträgt.

8. Straßenfertiger nach einem der Ansprüche 1 bis 7, **dadurch gekennzeichnet, dass** im Luftstromweg (X) hinter der Ansaugöffnung (12) ein Filterelement (17) angeordnet ist.

9. Straßenfertiger nach einem der Ansprüche 1 bis 8, **dadurch gekennzeichnet, dass** das Gebläse (13) elektrisch oder hydraulisch angetrieben ist.

10. Straßenfertiger nach einem der Ansprüche 1 bis 9, **dadurch gekennzeichnet, dass** der Querverteiler (7) einen rechten und einen linken Abschnitt aufweist, denen jeweils ein mittels Gebläse (13) betriebener Luftstromweg (X) zugeordnet ist.

11. Straßenfertiger nach einem der Ansprüche 1 bis 10, **dadurch gekennzeichnet, dass** das jeweilige Gebläse (13) ummantelt am Chassis (2) angeordnet ist.

## Claims

1. Road finishing machine having a chassis (2) which supports a driver's cab (1), an undercarriage (3), at least one drive assembly (4), a hydraulic system, a screed (5), an asphalt feed arrangement comprising a storage hopper (6) and a longitudinal conveyor apparatus (8) which conveys from the storage hopper (6) to a transverse distributor (7), and having a fan operated fumes suction system (10) with at least one air flow path (X), the exhaust line (11) of which has an intake opening (12) above the transverse distributor (7) and an outlet opening (18) at a level above the driver's cab (1), and the fan (13) being arranged in the region of the intake opening (12) of the exhaust line (11) of the at least one air flow path (X),**characterized in that** the intake opening (12) of the exhaust line (11) forms the intake opening of the fumes suction system (10), the fan (13) has an intake stub which, standing freely in space, forms an intake area as intake opening (12), and the fan (13) is arranged on the inlet side of the exhaust line (11) in the region of the intake opening (12).

2. Road finishing machine according to Claim 1, **characterized in that** the intake opening (12) is round or polygonal.

3. Road finishing machine according to Claim 1 or 2, **characterized in that** the diameter of the intake opening (12) corresponds substantially to the diameter of the exhaust line (11).

4. Road finishing machine according to one of Claims 1 to 3, **characterized in that** the nominal width of the exhaust line (11) lies in the range from 100 to 200 mm.

5. Road finishing machine according to one of Claims 1 to 4, **characterized in that** the fan (13) has a fan impeller which sucks in axially with a radial air outlet.

6. Road finishing machine according to one of Claims 1 to 5, **characterized in that** the fan (13) operates with a performance of an air volumetric flow of from 1000 to 3000 m³/h.

7. Road finishing machine according to one of Claims 1 to 6, **characterized in that** the vertical spacing between the intake opening (12) and an upper side of the transverse distributor (7) is more than 80 cm for the configuration of a suction path length.

8. Road finishing machine according to one of Claims 1 to 7, **characterized in that** a filter element (17) is arranged downstream of the intake opening (12) in the air flow path (X).

9. Road finishing machine according to one of Claims 1 to 8, **characterized in that** the fan (13) is driven electrically or hydraulically.

10. Road finishing machine according to one of Claims 1 to 9, **characterized in that** the transverse distributor (7) has a right-hand and a left-hand section which are in each case assigned an air flow path (X) which is operated by means of fan (13).

11. Road finishing machine according to one of Claims 1 to 10, **characterized in that** the respective fan (13) is arranged in a shrouded manner on the chassis (2).

## Revendications

1. Finisseur de routes comportant un châssis (2) supportant une cabine de conducteur (1), un train roulant (3), au moins un groupe motopropulseur (4), un système hydraulique, une table (5), un dispositif d'alimentation en asphalte comprenant une trémie (6) et un convoyeur longitudinal (8) convoyant depuis la trémie (6) jusqu'à un distributeur transversal (7), le finisseur de routes comportant en outre un aspirateur de fumée (10) actionné par un ventilateur et comprenant au moins un écoulement d'air (X) dont un conduit d'échappement (11) contient un orifice d'aspiration (12) au-dessus du distributeur transversal (7) et un orifice de sortie (18) à une hauteur au-dessus de la cabine de conducteur (1), le ventilateur (13) étant disposé dans la zone de l'orifice d'aspiration (12) du conduit d'échappement (11) de l'au moins un écoulement d'air (X), **caractérisé en ce que** l'orifice d'aspiration (12) du conduit d'échappement (11) forme l'orifice d'aspiration de l'aspirateur de fumée (10), **en ce que** le ventilateur (13) comporte une buse d'aspiration montée librement dans l'espace et formant une surface d'aspiration comme orifice d'aspiration (12) et **en ce que** le ventilateur (13) est disposé du côté de l'entrée de la conduite d'échappement (11) dans la zone de l'orifice d'aspiration (12).

2. Finisseur de routes selon la revendication 1, **caractérisé en ce que** l'orifice d'aspiration (12) est circulaire ou polygonal.

3. Finisseur de routes selon la revendication 1 ou 2, **caractérisé en ce que** le diamètre de l'orifice d'aspiration (12) correspond sensiblement au diamètre du conduit d'échappement (11).

4. Finisseur de routes selon une de revendications 1 à 3, **caractérisé en ce que** la largeur nominale du conduit d'échappement (11) se situe dans la plage de 100 à 200mm.

5. Finisseur de routes selon une des revendications 1 à 4, **caractérisé en ce que** le ventilateur (13) comporte une turbine aspirant axialement avec une sortie d'air radiale.

6. Finisseur de routes selon une des revendications 1 à 5, **caractérisé en ce que** le ventilateur (13) fonctionne à un régime de 1000 à 3000 m³/h de débit d'air.

7. Finisseur de routes selon une des revendications 1 à 6, **caractérisé en ce que**, pour la formation d'une longueur de chemin d'aspiration, la distance verticale entre l'orifice d'aspiration (12) et le côté supérieur du distributeur latéral (7) mesure plus de 80 cm.

8. Finisseur de routes selon une des revendications 1 à 7, **caractérisé en ce qu'**un élément filtrant (17) est disposé dans l'écoulement d'air (X) derrière l'orifice d'aspiration (12).

9. Finisseur de routes selon une des revendications 1 à 8, **caractérisé en ce que** le ventilateur (13) est entrainé électriquement ou hydrauliquement.

10. Finisseur de routes selon une des revendications 1 à 9, **caractérisé en ce que** le distributeur latéral (7) comporte une section droite et une section gauche à chacune desquelles est attribué un écoulement d'air (X) actionné par un ventilateur (13).

11. Finisseur de routes selon une des revendications 1 à 10, **caractérisé en ce que** chaque ventilateur (13) est disposé, de façon caréné sur le châssis (2).
